# EUROPÄISCHE PATENTSCHRIFT

(11) **EP 0 548 043 B1**
(45) Veröffentlichungstag und Bekanntmachung des Hinweises auf die Patenterteilung: **14.02.1996**
(21) Anmeldenummer: 92890260.0
(22) Anmeldetag: 14.12.1992
(51) Int. Cl.: G01L 9/12, G01L 9/04, G01L 9/08, G01L 23/22, G01L 19/04, G01L 9/00

(54) **Drucksensor**
Pressure sensor
Capteur de pression

(30) Priorität: 16.12.1991 AT 2492/91
(43) Veröffentlichungstag der Anmeldung: 23.06.1993
(73) Patentinhaber: AVL Gesellschaft für Verbrennungskraftmaschinen und Messtechnik mbH.Prof.Dr.Dr.h.c. Hans List, A-8020 Graz (AT)
(72) Erfinder: Glaser, Josef, Dr., A-8047 Graz (AT)
(74) Vertreter: Krause, Walter, Dr. Dipl.-Ing.

(56) Entgegenhaltungen:
- EP-A- 0 160 713
- US-A- 4 772 983
- CONTROL ENGINEERING vol. 2, no. 4, April 1962, page 151 YAO T.LI 'TWO-CYLINDER TRANSDUCER HAS STRAIGHT LINE RESPONSE'

## Beschreibung

Die Erfindung betrifft einen Drucksensor mit einem an einer Halterung befestigten und vom zu messenden Druck verformbaren, zumindest indirekt signalerzeugenden Membranteil, welcher ggf. mit einem Druckmeßelement zusammenwirkt, gemäß dem Oberbegriff des Anspruchs 1.

Ein Drucksensor ist beispielsweise aus der AT-PS 374 922 bekanntgeworden. Dieser Sensor weist einen in seinen verformbaren Bereichen ebenen Membranteil auf, welcher mit einem verstärkten Randbereich mit der Halterung bzw. einem Gehäuse gasdicht verbunden ist und mit einem ebenfalls verstärkt ausgeführten Mittelteil unter Zwischenschaltung eines stabförmigen Stempels auf ein im Gehäuse angeordnetes Meßelement wirkt. Der verformbare Bereich ist kreisringförmig ausgebildet, und weist zum Gehäuse einen engen Spalt auf.

Ein bei fast allen Drucksensoren auftretendes Problem ist die durch Temperaturänderungen verursachte Signalbeeinflussung bzw. Signaldrift, welche aus temperaturabhängigen Verformungen des Membranteiles resultiert. Um große Temperaturschwankungen des zu messenden Mediums vom kreisringförmige Bereich der Membran abzuhalten, weist der Membranteil des aus der AT-PS 374 922 bekannten Sensors einen am verstärkten Mittelteil angeordneten Hitzeschild auf, welcher die verformbaren Bereiche des Membranteiles überdeckt. Mit dieser Maßnahme können jedoch Signalstörungen, verursacht durch kurzfristige Temperaturschwankungen, nur zum Teil und jene, die aus langfristigen Temperaturänderungen resultieren, überhaupt nicht verhindert werden.

Weiters ist aus der DE-OS 27 35 171 ein Druckwandler bekannt, welcher einen zylindrischen Membranteil aufweist, nämlich den eine leitende Schicht tragenden äußeren Gehäusemantel. Die gegenüberliegende leitfähige Schicht liegt auf einem Element auf, welches durch die in Frage kommenden Druckkräfte praktisch nicht elastisch verformt wird. Eine Vorkehrung zur Temperaturkompensation ist aus dieser Druckschrift nicht ersichtlich.

In der DE-OS 30 21 088 wird eine Sensoranordnung in Form eines Röhrchenkondensators beschrieben, dessen zylindrisches Dielektrikum durch Druckeinwirkung ein aktives elektrisches Signal abgibt. Die beiden Elektroden haben hier lediglich die Funktion der Ladungsabfuhr und nicht die der Abstützung des Druckes und Umsetzung in ein primäres Meßsignal, wie das bei der Verformung einer Zylindermembran der Fall ist. Während eine Membran elastisch auf Druckverformungen reagiert und in der Lage ist Druckkräfte aufzunehmen, werden beim Röhrchenkondensator gemäß der DE-OS 30 21 088 diese Druckkräfte jedoch vom Dielektrikum aufgenommen.

Ein Drucksensor gemäß dem Oberbegriff des Anspruchs 1 ist aus dem Dokument CONTROL ENGINEERING, vol. 2, no. 4, April 1962, Seite 151: YAO T.LI "TWO-CYLINDER TRANSDUCER HAS STRAIGHT LINE RESPONSE" bekannt geworden.

Aufgabe der Erfindung ist es, einen Drucksensor der eingangs genannten Art derart auszubilden, daß jedenfalls kurzfristige Temperatursprünge, möglichst aber auch langfristige Temperaturänderungen wirkungsvoll kompensiert werden können.

Diese Aufgabe wird erfindungsgemäß dadurch gelöst, daß die jeweils paarweise zusammengefaßten zylindrischen Bereiche des Membranteiles zur Kompensation der unterschiedlichen Durchmesser unterschiedliche Wandstärken oder Massen aufweisen und/oder aus Materialien mit unterschiedlicher Wärmedehnzahl bestehen.

Der erfindungsgemäße Drucksensor hat den Vorteil, daß Verformungen durch Beheizung des Sensors - z.B. durch ein heißes Medium, Strahlung oder auch nur durch Kompressionswärme - die an einfachen herkömmlichen Drucksensoren große Fehlsignale ergeben, nicht durch Abschirmung vermindert sondern weitgehend kompensiert werden. Die beiden, zu einem Paar zusammengefaßten zylindrischen Bereiche werden bei Beheizung annähernd gleich stark (da annähernd gleicher Durchmesser) und auch gleichsinnig verformt, während der Meßdruck annähernd gleich große aber entgegengesetzt wirkende Verformungen verursacht. Eine Beschaltung der Meßelemente für die Druckmessung, welche die druckproportionalen Verformungen addiert, subtrahiert daher gleichzeitig die beheizungsproportionalen Verformungen, kompensiert also wirkungsvoll Temperaturfehler.

Die Kompensation der Temperaturverformung und des daraus resultierenden Fehldrucksignals (Temperaturdrift) ist bei einfachen Konstruktionen (gleiche Wandstärke und gleiches Material der zylindrischen Bereiche) meist unvollkommen, da die mittlere Wärmedehnung der beiden zugeordneten zylindrischen Bereiche um die Durchmesserdifferenz verschieden ist.

Verbleibende Dehnungsunterschiede der beiden Bereiche werden nun erfindungsgemäß dadurch ausgeglichen, daß die jeweils paarweise zusammengefaßten zylindrischen Bereiche des Membranteiles aus Materialien mit unterschiedlicher Wärmedehnzahl bestehen und/oder daß die beiden Bereiche unterschiedliche Wandstärken oder Massen aufweisen.

Beispielsweise kann bei sehr kurzfristigen Temperaturerhöhungen (z.B. in einer Brennkammer) bei welcher nur die vom Medium berührten Membranteile, nicht aber die davon abgeschirmte Mittelelektrode erwärmt wird, eine unterschiedliche Wärmedehnung dadurch vermieden werden, daß der innere zylindrische Bereich mit geringerer Wandstärke ausgeführt wird. Durch die geringere Masse des inneren zylindrischen Bereiches erreicht dieser eine höhere Temperatur und eine dem äußeren zylindrischen Bereich angepaßte Verformung.

Es sind nun eine Vielzahl von Ausführungsvarianten denkbar.

In einer ersten Gruppe von vorteilhaften Varianten ist vorgesehen, daß der Membranteil als einstückiger Rotationskörper ausgeführt ist und zumindest einen Ringraum mit U-förmigem Querschnitt bildet, wobei die zylindrischen Bereiche den Ringgraum in radialer Richtung begrenzen und die freien Ränder der zylindrischen Bereiche an der Halterung befestigt sind.

Eine zweite Gruppe hingegen ist dadurch gekennzeichnet, daß der Membranteil mehrteilig ausgebildet ist und jeweils zwei der konzentrisch zueinander angeordneten zylindrischen Hereiche einen Ringraum mit U-förmigem Querschnitt bilden und mit zumindest jeweils einem Rand an der Halterung befestigt sind. Unter U-förmigem Querschnitt werden im folgenden sowohl gerundete als auch eckige Formen verstanden.

Bei Ausführungsvarianten mit mehrteiliger Membran können ererfindungsgemäß die von der Halterung abstehenden Ränder der zylindrischen Bereiche paarweise mit einem Stützelement verbunden sein. Falls die beiden zylindrischen Bereiche auf unterschiedlichem Potential liegende Elektroden eines kapazitiven Meßsystems sind, kann das Stützelement als Isolator ausgeführt sein.

Eine besonders einfache Ausführungsvariante sieht vor, daß jeweils zwei der konzentrisch zueinander angeordneten zylindrischen Bereiche aus elektrisch leitendem Material bestehen, zueinander isoliert sind und als Elektrode sowie Gegenelektrode eines kapazitiven Meßsystems ausgebildet sind.

Nach dem äußeren Erscheinungsbild lassen sich die einzelnen Ausführungsvarianten des Drucksensors in drei Hauptgruppen einteilen, wobei die erste dadurch gekennzeichnet ist, daß der Membranteil auf der vom U-förmigen Ringraum abgewandten Seite vom zu messenden Druck beaufschlagbar ist und daß im U-förmigen Ringraum zumindest ein Druckmeßelement vorgesehen ist.

Die zweite Hauptgruppe, deren Ausführungsvarianten durchwegs ein äußerst geringes Schadvolumen in den Meßraum einbringen, zeichnet sich dadurch aus, daß der Membranteil in einer ringförmigen Nut der Halterung angeordnet ist, daß der Membranteil auf der dem U-förmigen Ringraum zugewandten Seite vom zu messenden Druck beaufschlagbar ist, sowie daß zwischen jedem zylindrischen Bereich des Membranteiles und der zylindrischen Wand der ringförmigen Nut ein Druckmeßelement angeordnet ist.

Schließlich zeichnet sich die dritte Gruppe dadurch aus, daß der Membranteil torusförmig in sich geschlossen ausgeführt ist, wobei die zylindrischen Bereiche konzentrische Begrenzungsflächen eines geschlossenen Ringraumes bilden, welcher ein Druckmeßelement aufnimmt. Die in einem Bereich außerhalb der zylindrischen Meßbereiche an der torusförmigen Membran angreifende Halterung bzw. Stütze, kann auch als isolierendes Kabel ausgeführt sein, mit welchem die elektrischen Signale des Druckmeßelementes erfaßt werden.

In den verschiedenen Ausführungsvarianten können nun eine Reihe von unterschiedlichen Druckmeßelementen bzw. Druckmeßsystemen zur Anwendung gelangen. Unter Druckmeßelement bzw. Druckmeßsystem sind im folgenden solche Meßeinrichtungen zu verstehen, die unmittelbar oder mittelbar die vom zu messenden Druck hervorgerufenen Verformungen der zylindrischen Bereiche bzw. die Differenz dieser Verformungen messen und damit ein vom zu messenden Druck abhängiges Meßsignal zur Verfügung stellen.

Solche Meßelemente können ohne nennenswerte Kraftrückwirkung auf die zylindrischen Bereiche arbeiten, also z.B. wegmessend sein (kapazitive Systeme, Hall Sensoren, optische Sensoren, od. dgl.); auch Meßelemente, die die Spannungen in den zylindrischen Bereichen messen (z.B. Dehnmeßstreifen), arbeiten meist ohne wesentliche Kraftrückwirkung.

Andere Meßelemente übernehmen durch ihre Steifigkeit größere Anteile der auf die zylindrischen Bereiche wirkenden Drücke bzw. Kräfte und beziehen ihr Signal aus den dabei entstehenden Kräften oder Drücken (piezoelektrische Elemente, Halbleiter deren Widerstand sich über die Kraft ändert usw) oder es wird die Verformung der zylindrischen Bereiche über ein Druckmedium dem Druckmeßelement mitgeteilt.

So kann das Meßelement im einfachsten Fall eine oder zwei auf gleichem elektrischen Potential liegende Elektroden eines kapazitiven Meßsystems aufweisen, wobei die Gegenelektrode durch den bzw. die jeweils benachbarten zylindrischen Bereiche gebildet ist.

Weiters ist es möglich, daß das Meßelement ein auf jedem zylindrischen Bereich des Membranteiles ggf, unter Zwischenlage einer elektrischen Isolierschicht aufgebrachter Dehnmeßstreifen ist.

Schließlich kann das Meßelement erfindungsgemäß auch ein bei Druckbeaufschlagung seine elektrische Eigenschaften änderndes Element, beispielsweise ein piezoelektrisches Element sein, welches zwischen einander zugeordneten zylindrischen Bereichen des Membranteiles oder zwischen jeweils einem der zylindrischen Bereiche und einer benachbarten zylindrischen Wand der ringförmigen Nut angeordnet ist. Das Druckmeßelement kann in Segmente unterteilt sein oder z.B. als piezoelektrischer Film vorliegen.

Weiters ist es gemäß der Erfindung denkbar, daß der U-förmige Ringraum des Membranteiles mit einem Druckübertragungsmedium gefüllt ist, welches mit einem in der Halterung angeordneten Druckmeßelement in Verbindung steht, bzw. daß der Membranteil in einer ringförmigen Nut der Halterung angeordnet ist, und daß der Ringraum zwischen ringförmiger Nut und Membranteil mit einem Druckübertragungsmedium gefüllt ist, welches mit einem in der Halterung angeordneten Druckmeßelement in Verbindung steht. Diese Ausführungsvariante kann vor allem bei raschen, zyklischen Temperaturänderungen eingesetzt werden, welche keine wesentlichen Temperaturänderungen im Druckübertragungsmedium hervorrufen.

Eine Kompensation der durch die unterschiedlichen Durchmesser verursachten Signalanteile kann in einem kapazitiven Meßsystem auch dadurch erreicht werden, daß die zylindrischen Spalte zwischen der bzw. den Elektroden des kapazitiven Meßsystems und den jeweils benachbarten zylindrischen Bereichen unterschiedlich breit sind. Der an den zylindrischen Bereich mit dem kleineren Durchmesser angrenzende Spalt sollte dabei kleiner sein als der andere Spalt, wenn die Wandstärken der beiden zylindrischen Bereiche gleich sind.

Weiters kann bei einem Drucksensor, dessen Meßelement eine im U-förmigen Ringraum angeordnete Elektrode eines kapazitiven Meßsystems ist, die Gegenelektrode durch einen zylindrischen Bereich des Membranteiles gebildet sein, welcher mit der Elektrode durch eine elektrische Isolierschicht gekoppelt ist.

Weiters ist es denkbar, daß das Meßelement zwei im U-förmigen Ringraum angeordnete Elektroden eines kapazitiven Meßsystems aufweist, welche mit den jeweils benachbarten zylindrischen Bereichen durch elektrische Isolierschichten gekoppelt sind.

Die Ausführungen mit der mechanischen Kopplung bieten zunächst vor allem einen mechanisch stabileren Aufbau bei großen dünnen Elektroden bzw. Membranteilen, darüber hinaus ermöglicht eine entsprechende Ausführung mit gut abgestimmten Membran-, Elektroden- und Isoliermaterialien, sowie abgestimmten Dicken der einzelnen Komponenten ein Minimieren von Temperaturdriften.

Schließlich ist erfindungsgemäß vorgesehen, daß der Membranteil in einen in den zu überwachenden Druckraum ragenden Bauteil, beispielsweise einer Zündkerze, eines Glühstiftes, einer Einspritzdüse od. dgl., integriert ist.

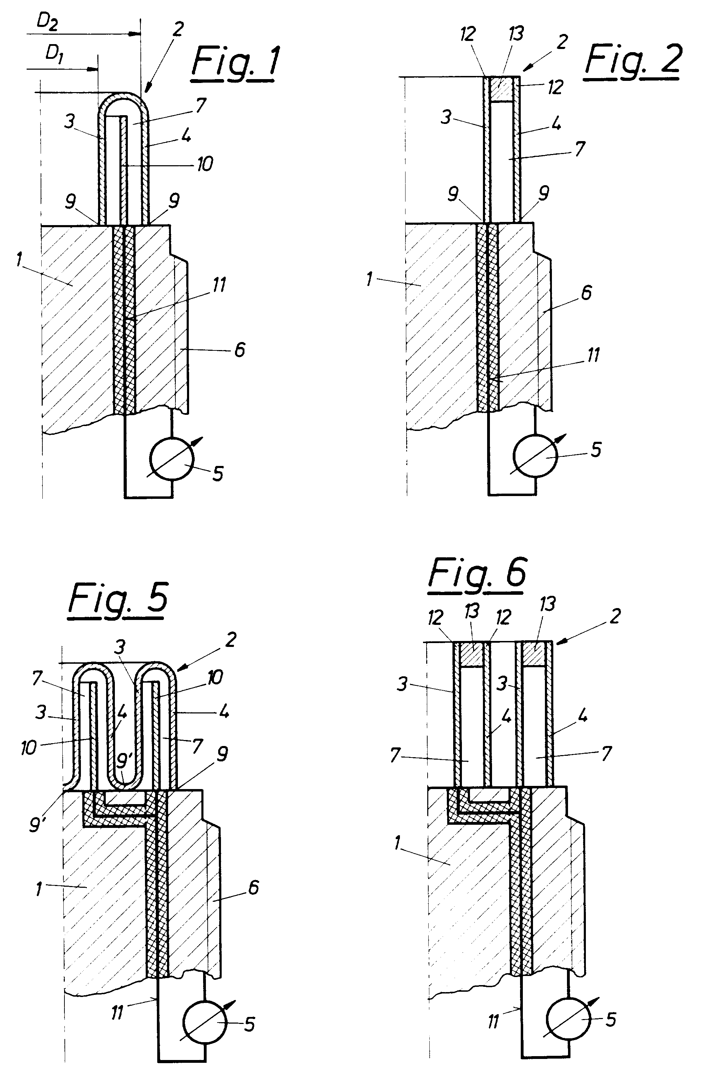

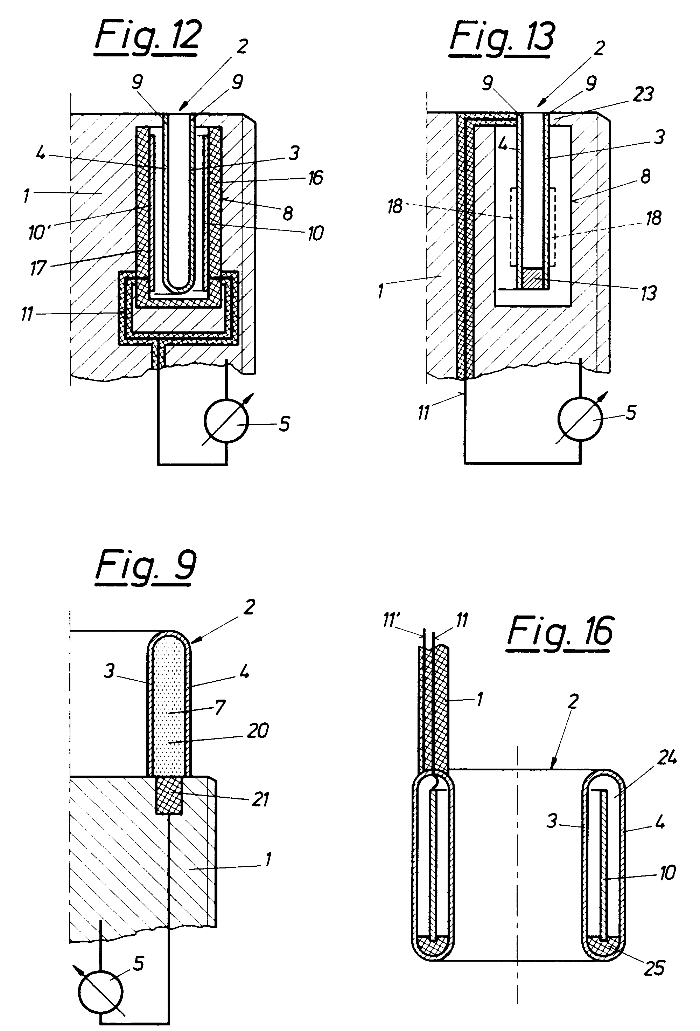

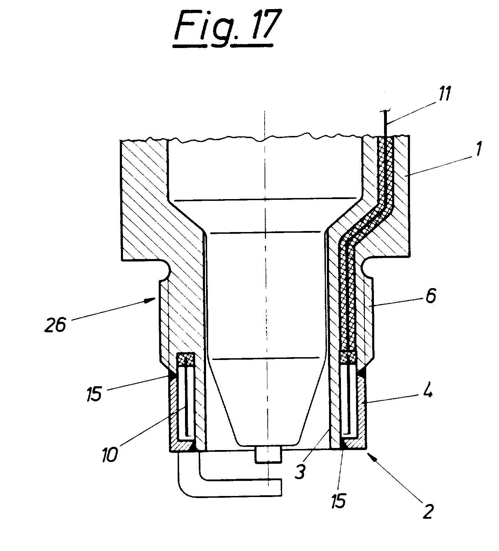

Die Erfindung wird im folgenden anhand von Zeichnungen näher erläutert. Es zeigen in zum Teil schematischer Darstellung Fig. 1 ein Ausführungsbeispiel eines erfindungsgemäßen Drucksensors in einem Axialschnitt, die Fig. 2 bis 15 Ausführungsvarianten in einer Schnittdarstellung gemäß Fig. 1, Fig. 16 ein Ausführungsbeispiel eines erfindungsgemäßen Drucksensors mit torusförmiger Membran und Fig. 17 einen in eine Zündkerze integrierten Drucksensor.

Die in den Fig. 1 bis 17 dargestellten Ausführungsvarianten eines Drucksensors weisen einen an oder in einer Halterung 1 angeordneten Membranteil 2 auf, welcher durch den zu messenden Druck verformt wird und direkt oder indirekt ein vom Druck abhängiges Signal erzeugt. Der Membranteil 2 weist zu einem oder mehreren Paaren zusammengefaßte, konzentrisch zueinander angeordnete zylindrische Bereiche 3 und 4 auf, welche einen im Vergleich zum Zylinderdurchmesser geringen radialen Abstand zueinander aufweisen (in den Zeichnungen überhöht dargestellt). Durch den zu messenden Druck wird der Durchmesser D₁ des zylindrischen Bereiches 3 vergrößert und der Durchmesser D₂ des Bereiches 4 verkleinert. Bei einer Temperaturänderung verändern sich die Durchmesser D₁ und D₂ jedoch gleichsinnig, sodaß durch eine entsprechende Beschaltung der unten noch näher beschriebenen Druckmeßelemente ein von Temperatureinflüssen unabhängiges Signal erzeugt und in einer hier nur schematisch dargestellten Auswerte- bzw. Anzeigevorrichtung 5 verarbeitet bzw. dargestellt wird.

Der Drucksensor ist beispielsweise über ein an der Halterung 1 vorgesehenes Gewinde 6 in eine Meßbohrung einsetzbar.

Bei den Ausführungsvarianten nach Fig. 1 bis 9 und 17 ist der einen im wesentlichen U-förmigen Ringraum 7 begrenzende Membranteil 2 außen an der Halterung 1 befestigt und wird von außen bzw. an der vom Ringraum 7 abgewandten Seite vom zu messenden Druck beaufschlagt. Bei den Ausführungsvarianten 10 bis 15 hingegen ist der Membranteil 2 in einer ringförmigen Nut 8 der Halterung 1 angeordnet. Der Membranteil 2 ist gegenüber dem zu messenden Medium offen und wird von innen, bzw. der dem Ringraum zugewandten Seite vom zu messenden Druck beaufschlagt. Der Membranteil 2 kann sowohl als einstückiger Rotationskörper, wie beispielsweise in Fig. 1, 5, 12 oder 16, als auch mehrteilig, wie z.B. in Fig. 2, 6 oder 10 ausgeführt sein.

Bei der in Fig. 1 dargestellten Ausführungsvariante ist der Membranteil 2 mit seinen freien Rändern 9 an der Halterung 1 befestigt und weist in seinem U-förmigen Ringraum eine zylindrische Elektrode 10 eines kapazitiven Meßsystems auf, welche über eine Leitung 11 mit der Auswerte- bzw. Anzeigevorrichtung 5 in Verbindung steht. Die zweite Elektrode des kapazitiven Meßsystems wird durch die auf Null-Potential liegenden, jeweils in Umfangsrichtung geschlossenen zylindrischen Bereiche 3 und 4 des Membranteiles 2 gebildet. Bei einem Druckanstieg werden beide zylindrischen Bereiche 3 und 4 näher an die Elektrode 10 gedrückt, wobei sich deren Signalanteile addieren. Bei einer gleichzeitigen Temperaturerhöhung vergrößern sich beide Durchmesser D₁ und D₂ gleichsinnig, sodaß in erster Näherung - bei Vernachlässigung der geringfügig unterschiedlichen Durchmesser D₁ und D₂ - kein Signalbeitrag aus der Temperaturerhöhung zu erwarten ist.

Eine ähnliche Ausführung wie in Fig. 1 ist in Fig. 5 dargestellt. Hier sind mehrere Paare konzentrischer Bereiche 3 und 4 zu einem Membranteil 2 zusammengefaßt. Die Signalteile der in die einzelnen Ringräume 7 eintauchenden zylindrischen Elektroden 10 werden zu einem Ausgangssignal summiert. Der Membranteil 2 kann mit seinem Rand 9, aber auch mit den gekrümmten Bereichen 9' mit der Halterung 1 verbunden sein.

Der Membranteil 2 kann auch, wie in Fig. 2 und 6 dargestellt, mehrteilig ausgeführt sein, wobei jeweils ein Rand 9 der zylindrischen Bereiche 3 und 4 an der Halterung 1 befestigt ist und die von der Halterung abstehenden Ränder 12 (bzw. die in die Nut 8 der Halterung hineinragenden Ränder) paarweise mit einem Stützelement 13 verbunden sind. In der einfachen Ausführungsvariante nach Fig. 2 und 6 bilden die zylindrischen Bereiche 3 und 4 jeweils eine zylindrische Elektrode bzw. Gegenelektrode eines kapazitiven Meßsystems. Das Stützelement 13 dient gleichzeitig als elektrische Isolation.

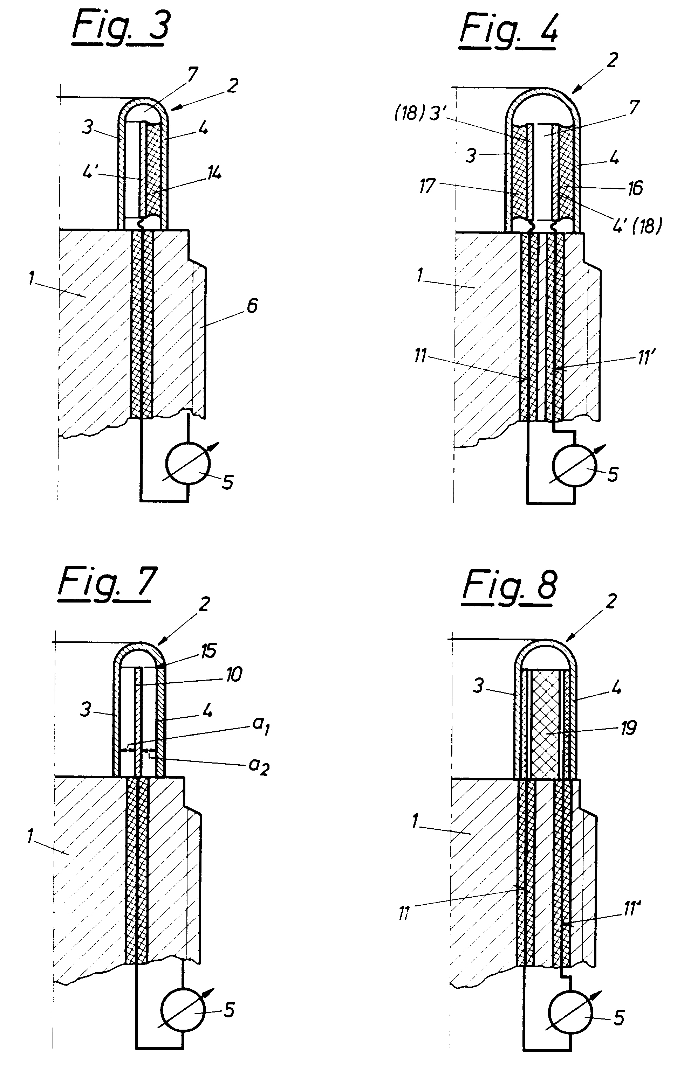

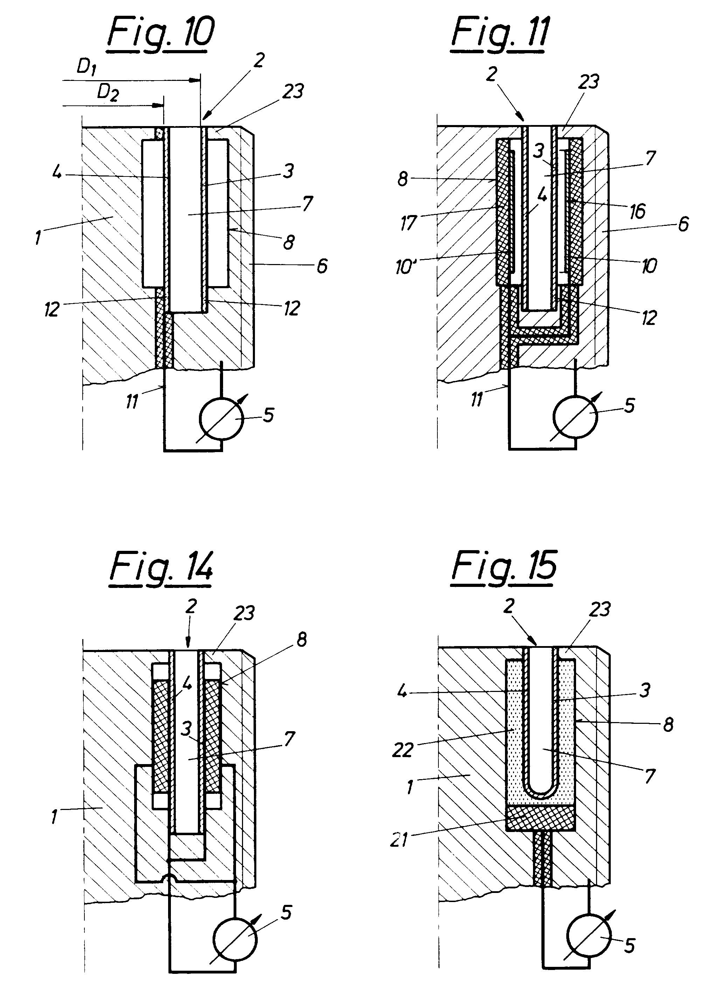

Fig. 3 zeigt eine mechanisch besonders stabile Ausführungsvariante, bei welcher die im Ringraum 7 vorliegende zylindrische Elektrode 4' unter Zwischenlage einer Isolierschicht 14 mit einem der zylindrischen Bereiche 4 gekoppelt ist.

Bei der Ausführung nach Fig. 4 weist der metallische Membranteil 2 an der Innenfläche seiner zylindrischen Bereiche 3 und 4 jeweils eine Isolierschicht 16, 17 auf, welche die Elektroden 3', 4' eines kapazitiven Systems tragen. Durch diesen Aufbau werden äußere elektrische Felder von den Elektroden 3', 4' abgeschirmt. Die Elektroden 3', 4' stehen über Leitungen 11, 11' mit der Auswerte- bzw. Anzeigevorrichtung 5 in Verbindung Anstelle der Elektroden 3', 4', können die Isolierschichten auch Dehnmeßstreifen 18 als Druckmeßelement tragen.

Der Membranteil 2 kann auch aus einem elektrischen Isolator bestehen, dessen zylindrische Bereiche 3 und 4 Elektroden eines kapazitiven Meßsystems tragen.

Weiters sind verschiedene Maßnahmen denkbar, um die durch die unterschiedlichen Durchmesser D₁ und D₂ der zylindrischen Bereiche 3 und 4 hervorgerufenen Temperaturdriften zu minimieren. So können beispielsweise, entsprechend einer in Fig. 7 dargestellten Ausführungsvariante, die Spalte a₁ und a₂ zwischen den zylindrischen Bereichen 3 bzw. 4 und der zylindrischen Elektrode 10 derart unterschiedlich breit sein, daß sich Signalbeiträge durch Temperaturverformung in gewissen Bereichen aufheben. Wie in Fig. 7 angedeutet, ist es auch möglich, die beiden zylindrischen Bereiche 3 und 4 eines Membranteiles 2 aus Materialien mit unterschiedlicher Wärmedehnzahl herzustellen oder für beide Bereiche unterschiedliche Wandstärken bzw. Massen zu wählen. Die beiden unterschiedlichen Bereiche 3 und 4 können z. B. miteinander verschweißt (siehe Schweißnaht 15) werden oder gemäß Fig. 2 durch ein bereits erwähntes, isolierendes Stützelement 13 druckdicht verbunden sein.

Als weiteres Druckmeßelement ist entsprechend Fig. 8 ein druckempfindliches, beispielsweise ein piezoelektrisches Element 19 denkbar, welches in Segmenten oder als piezoelektrischer Film bzw. Folie zwischen den zylindrischen Bereichen 3 und 4 des Membranteiles 2 oder zwischen jeweils einem zylindrischen Rereich 3 und 4 und einer benachbarten zylindrischen Wand der ringförmigen Nut 8 (siehe Fig. 14) angeordnet ist. Es können jedoch auch andere Elemente, welche bei Druckbeaufschlagung eine elektrische Eigenschaft ändern, verwendet werden, beispielsweise Halbleiter, deren Widerstand mit der mechanischen Belastung veränderlich ist.

Bei der in Fig. 9 dargestellten Ausführungsvariante befindet sich im Ringraum 7 zwischen den beiden zylindrischen Bereichen 3 und 4 des Membranteiles 2 ein Druckübertragungsmedium 20, welches mit einem in der Halterung 1 angeordneten Druckmeßelement 21 in Verbindung steht. Eine ähnliche Ausführungsvariante, mit einem in einer ringförmigen Nut 8 der Halterung 1 angeordneten Membranteil 2 ist in Fig. 15 dargestellt. Hier befindet sich das Druckübertragungsmedium 20 in einem von der ringförmigen Nut 8 und dem darin angeordneten Membranteil 2 begrenzten Ringraum 22.

Bei den Ausführungen nach Fig. 10 bis 15, welche durchwegs ein äußerst geringes Schadvolumen aufweisen, ist der Membranteil 2 in einer ringförmigen Nut 8 der Halterung 1, welche ein Sensorgehäuse bildet, angeordnet. Anschließend an einen engen Randbereich 23, wo der Membranteil 2 gehalten wird, weist die Nut 8 eine Erweiterung bzw. Ausnehmung auf, welche zur Freistellung der zylindrischen Bereiche 3 und 4 und/oder zur Aufnahme eines Druckmeßelementes dient.

Wie z. B. in Fig. 10, 11 und 14 dargestellt, können die zylindrischen Bereiche 3 und 4 zusätzlich an den Rändern 12 im unteren Bereich der Nut 8 fix verankert sein, wodurch ein robuster, vibrationsunempfindlicher Drucksensor entsteht. Während nun in Fig. 10 die beiden zylindrischen Bereiche 3 und 4 Elektrode plus Gegenelektrode eines kapazitiven Meßsystems bilden, wovon eine auf Null-Potential liegt und die andere zur Halterung 1 elektrisch isoliert ist, liegt der Membranteil 2 in Fig. 11 zur Gänze auf Null-Potential und zwei Elektroden 10 und 10' auf Isolierschichten 16 und 17 bilden die zweite Elektrode des kapazitiven Meßsystems. Die Isolierschichten können auch entfallen, falls das Gehäuse bzw. die Halterung 1 aus einem elektrisch isolierenden Material besteht.

Die Ausführungsvarianten nach Fig. 12 bzw. 13 entsprechen vom Funktionsprinzip her jenen nach Fig. 11 bzw. 10, wobei hier die zylindrischen Bereiche 3, 4 lediglich an jeweils einem Rand 9 mit der Halterung 1 verbunden sind und die anderen Ränder frei in die Nut 8 ragen. Der Membranteil 2 ist in Fig. 12 als einstückiger Rotationskörper ausgeführt und besteht in Fig. 13 aus zwei separaten zylindrischen Teilen, welche durch ein isolierendes Stützelement 13 verbunden sind.

Wie in Fig. 13 strichliert dargestellt, ist es auch bei diesen Ausführungsvarianten möglich, anstelle des kapazitiven Meßsystems Dehnmeßstreifen 18 vorzusehen, welche entweder direkt oder unter Zwischenlage einer Isolierschicht auf die zylindrischen Bereiche 3 und 4 aufgebracht werden.

Die in Fig. 16 dargestellte Ausführungsvariante zeigt einen Drucksensor mit einem in sich geschlossenen, torusförmigen Membranteil 2. Die zylindrischen Bereiche 3 und 4 begrenzen radial einen geschlossenen Ringraum 24, welcher das Druckmeßelement, im dargestellten Beispiel eine Elektrode 10 eines kapazitiven Meßsystems, aufnimmt. Die zylindrische Elektrode 10 stützt sich über ein elektrisch isolierendes Stützelement 25 am Membranteil 2 ab. Wenn die Halterung 1 als isoliertes Kabel ausgeführt ist, werden von diesem Kabel die mit dem Membranteil 2 und mit der Elektrode 10 in Kontakt stehenden Leitungen 11, 11' aufgenommen.

In diesem Zusammenhang sei erwähnt, daß es auch möglich ist, das der Erfindung zugrundeliegende Meßprinzip bei einem Membranteil anzuwenden, welcher zwei konzentrische Kugelflächen aufweist, wobei eine Kugelfläche von außen und die andere durch zumindest eine Öffnung in den Kugelflächen von innen mit Druck beaufschlagt wird. Zwischen den beiden Kugelflächen befindet sich eines der in den voranstehenden Beispielen genannten Druckmeßelemente.

Die beschriebenen Ausführungsvarianten des Drucksensors können - wie in Fig. 17 dargestellt - auch beispielsweise in den in einen Druckraum, z. B. einer Brennkraftmaschine ragenden vorderen Teil 26 einer Zündkerze (auch Glühstift, Einspritzdüse od. dgl.) integriert sein, wobei hier eine Ausführungsvariante des Membranteiles, vergleichbar mit Fig. 1 oder Fig. 7, gewählt wurde.

## Patentansprüche

1. Drucksensor mit einem an einer Halterung (1) befestigten und vom zu messenden Druck verformbaren, zumindest indirekt signalerzeugenden Membranteil (2), welcher ggf. mit einem Druckmeßelement (3', 4'; 10; 18; 19) zusammenwirkt, wobei der Membranteil (2) zumindest ein Paar mit geringem radialen Abstand konzentrisch zueinander angeordnete, jeweils in Umfangsrichtung geschlossene zylindrische Bereiche (3, 4) aufweist, wobei einer der zylindrischen Bereiche (3) im Sinne einer Vergrößerung seines Durchmessers (D₁) und der andere (4) im Sinne einer Verkleinerung seines Durchmessers (D₂) mit Druck beaufschlagbar ist und bei einer Temperaturänderung eine gleichsinnige Änderung beider Durchmesser (D₁, D₂) erfolgt, **dadurch gekennzeichnet**, daß die jeweils paarweise zusammengefaßten zylindrischen Bereiche (3, 4) des Membranteiles (2) zur Kompensation der unterschiedlichen Durchmesser (D₁, D₂) unterschiedliche Wandstärken oder Massen aufweisen und/oder aus Materialien mit unterschiedlicher Wärmedehnzahl bestehen.

2. Drucksensor nach Anspruch 1, **dadurch gekennzeichnet**, daß der Membranteil (2) als einstückiger Rotationskörper ausgeführt ist und zumindest einen Ringraum (7) mit U-förmigem Querschnitt bildet, wobei die zylindrischen Bereiche (3, 4) den Ringgraum (7) in radialer Richtung begrenzen und die freien Ränder (9) der zylindrischen Bereiche (3, 4) an der Halterung (1) befestigt sind.

3. Drucksensor nach Anspruch 1, **dadurch gekennzeichnet**, daß der Membranteil (2) mehrteilig ausgebildet ist und jeweils zwei der konzentrisch zueinander angeordneten zylindrischen Bereiche (3, 4) einen Ringraum (7) mit U-förmigem Querschnitt bilden und mit zumindest jeweils einem Rand (9) an der Halterung (1) befestigt sind.

4. Drucksensor nach Anspruch 3, **dadurch gekennzeichnet**, daß die von der Halterung (1) abstehenden Ränder (12) der zylindrischen Bereiche (3, 4) paarweise mit einem Stützelement (13) verbunden sind.

5. Drucksensor nach Anspruch 3 oder 4, **dadurch gekennzeichnet**, daß jeweils zwei der konzentrisch zueinander angeordneten zylindrischen Bereiche (3, 4) aus elektrisch leitendem Material bestehen, zueinander isoliert sind und als Elektrode sowie Gegenelektrode eines kapazitiven Meßsystems ausgebildet sind.

6. Drucksensor nach einem der Ansprüche 2 bis 4, **dadurch gekennzeichnet**, daß der Membranteil (2) auf der vom U-förmigen Ringraum (7) abgewandten Seite vom zu messenden Druck beaufschlagbar ist und daß im U-förmigen Ringraum (7) zumindest ein Druckmeßelement (3', 4'; 10; 18; 19) vorhanden ist.

7. Drucksensor nach Anspruch 6, **dadurch gekennzeichnet**, daß das Druckmeßelement eine im U-förmigen Ringraum (7) angeordnete Elektrode (4') eines kapazitiven Meßsystems ist, sowie daß die Gegenelektrode durch einen zylindrischen Bereich (3, 4) des Membranteiles gebildet ist, welcher mit der Elektrode (4') durch eine elektrische Isolierschicht (14) gekoppelt ist.

8. Drucksensor nach Anspruch 6, **dadurch gekennzeichnet,** daß das Druckmeßelement zwei im U-förmigen Ringraum (7) angeordnete Elektroden (3', 4') eines kapazitiven Meßsystems aufweist, welche mit den jeweils benachbarten zylindrischen Bereichen (3, 4) durch elektrische Isolierschichten (16, 17) gekoppelt sind.

9. Drucksensor nach einem der Ansprüche 2 bis 4, **dadurch gekennzeichnet**, daß der Membranteil (2) in einer ringförmigen Nut (8) der Halterung (1) angeordnet ist, daß der Membranteil (2) auf der dem U-förmigen Ringraum (7) zugewandten Seite vom zu messenden Druck beaufschlagbar ist, sowie daß zwischen jedem zylindrischen Bereich (3, 4) des Membranteiles (2) und der zylindrischen Wand der ringförmigen Nut (8) ein Druckmeßelement (10; 18; 19) angeordnet ist.

10. Drucksensor nach Anspruch 1, **dadurch gekennzeichnet**, daß der Membranteil (2) torusförmig in sich geschlossen ausgeführt ist, wobei die zylindrischen Bereiche (3, 4) konzentrische Begrenzungsflächen eines geschlossenen Ringraumes (24) bilden, welcher ein Druckmeßelement (10; 18; 19) aufnimmt.

11. Drucksensor nach Anspruch 10, **dadurch gekennzeichnet,** daß das Meßelement eine Elektrode (10) eines kapazitiven Meßsystems ist, welche sich über ein elektrisch isolierendes Stützelement (25) am torusförmigen Membranteil (2) abstützt.

12. Drucksensor nach Anspruch 6 oder 9, **dadurch gekennzeichnet**, daß das Meßelement eine (10) oder zwei auf gleichem elektrischen Potential liegende Elektroden (10, 10') eines kapazitiven Meßsystems aufweist, wobei die Gegenelektrode durch den bzw. die jeweils benachbarten zylindrischen Bereiche (3, 4) gebildet ist.

13. Drucksensor nach Anspruch 12, **dadurch gekennzeichnet,** daß die zylindrischen Spalte (a₁, a₂) zwischen der bzw. den Elektroden (10, 10') des kapazitiven Meßsystems und den jeweils benachbarten zylindrischen Bereichen (3, 4) unterschiedlich breit sind.

14. Drucksensor nach Anspruch 6, 9 oder 10, **dadurch gekennzeichnet**, daß das Druckmeßelement ein auf jedem zylindrischen Bereich (3, 4) des Membranteiles (2) ggf. unter Zwischenlage einer elektrischen Isolierschicht (16, 17) aufgebrachter Dehnmeßstreifen (18) ist.

15. Drucksensor nach Anspruch 6, 9 oder 10, **dadurch gekennzeichnet**, daß das Druckmeßelement ein bei Druckbeaufschlagung seine elektrischen Eigenschaften änderndes Element, beispielsweise ein piezoelektrisches Element (19) ist, welches zwischen einander zugeordneten zylindrischen Bereichen (3, 4) des Membranteiles (2) oder zwischen jeweils einem der zylindrischen Bereiche (3, 4) und einer benachbarten zylindrischen Wand der ringförmigen Nut (8) angeordnet ist.

16. Drucksensor nach einem der Ansprüche 2 bis 4, **dadurch gekennzeichnet**, daß der U-förmige Ringraum (7) des Membranteiles (2) mit einem Druckübertragungsmedium (20) gefüllt ist, welches mit einem in der Halterung (1) angeordneten Druckmeßelement (21) in Verbindung steht.

17. Drucksensor nach einem er Ansprüche 2 bis 4, **dadurch gekennzeichnet**, daß der Membranteil (2) in einer ringförmigen Nut (8) der Halterung (1) angeordnet ist und daß der Ringraum (22) zwischen ringförmiger Nut (8) und Membranteil (2) mit einem Druckübertragungsmedium (20) gefüllt ist, welches mit einem in der Halterung (1) angeordneten Druckmeßelement (21) in Verbindung steht.

18. Drucksensor nach einem der Ansprüche 1 bis 17, **dadurch gekennzeichnet**, daß der Membranteil (2) in einen in den zu überwachenden Druckraum ragenden Bauteil (26), beispielsweise einer Zündkerze, eines Glühstiftes, einer Einspritzdüse od. dgl., integriert ist.

## Claims

1. A pressure sensor comprising a membrane part (2) with at least indirect signal generation, which is attached to a supporting base (1) and is deformable by the pressure to be measured, and which cooperates with a pressure sensing element (3', 4'; 10; 18; 19) if required, the said membrane part (2) being provided with at least one pair of concentric cylindrical surfaces (3, 4) positioned at a small radial distance from each other, which are closed along their circumference, one of said cylindrical surfaces (3) increasing its diameter (D₁) and the other one (4) decreasing its diameter (D₂) upon being subject to pressure, the two diameters (D₁, D₂ ) undergoing changes in the same direction in the instance of a temperature change, **characterized in that** the cylindrical surfaces (3, 4) of the membrane part (2), which are combined into pairs, have different wall thicknesses or masses, and/or are made of materials with different coefficients of thermal expansion, in order to compensate the difference in diameters (D₁, D₂ ).

2. A pressure sensor as in claim 1, **characterized in that** the membrane part (2) is configured as a rotational body made of one piece, forming at least one annular space (7) of U-shaped cross-section, the cylindrical surfaces (3, 4) enclosing the annular space (7) radially and the free rims (9) of the cylindrical surfaces (3, 4) being attached to the supporting base (1).

3. A pressure sensor as in claim 1, **characterized in that** the membrane part (2) is made of several pieces, every two of the cylindrical surfaces (3, 4) positioned concentrically to each other forming an annular space (7) of U-shaped cross-section and being attached to the supporting base (1) by at least one rim (9).

4. A pressure sensor as in claim 3, **characterized in that** the rims (12) of the cylindrical surfaces (3, 4) distant from the supporting base (1) are connected to a spacing element (13) in pairs.

5. A pressure sensor as in claim 3 or 4, **characterized in that** two of the concentric cylindrical surfaces (3, 4) are made of electrically conductive material, and are insulated against each other, and are configured as electrode and counter-electrode of a capacitive measuring system.

6. A pressure sensor as in any of claims 2 to 4, **characterized in that** the membrane part (2) is subject to the pressure to be measured on the side facing away from the U-shaped annular space (7), and that at least one pressure sensing element (3', 4'; 10; 18; 19) is provided in the U-shaped annular space (7).

7. A pressure sensor as in claim 6, **characterized in that** the pressure sensing element is an electrode (4') located in the U-shaped annular space (7) of a capacitive system, and that the counterelectrode is formed by a cylindrical surface (3, 4) of the membrane part, which is coupled to the electrode (4') by an electrically insulating layer (14).

8. A pressure sensor as in claim 6, **characterized in that** the pressure sensing element is provided with two electrodes (3', 4') of a capacitive system, which are located in the U-shaped annular space (7) and are coupled to the adjacent cylindrical surfaces (3, 4) by electrically insulating layers (16, 17).

9. A pressure sensor as in any of claims 2 to 4, **characterized in that** the membrane part (2) is placed in an annular groove (8) in the supporting base (1), and that the membrane part (2) is subject to the pressure to be measured on the side facing towards the U-shaped annular space (7), and, further, that a pressure sensing element (10; 18; 19) is placed between each cylindrical surface (3, 4) of the membrane part (2) and the cylindrical wall of the annular groove (8).

10. A pressure sensor as in claim 1, **characterized in that** the membrane part (2) is configured as a closed torus, the cylindrical surfaces (3, 4) forming concentric boundary surfaces of a closed annular space (24) containing a pressure sensing element (10; 18; 19).

11. A pressure sensor as in claim 10, **characterized in that** the measuring element is an electrode (10) of a capacitive measuring system, which is held on the toroidal membrane part (2) by means of an electrically insulating supporting element (25).

12. A pressure sensor as in claim 6 or 9, **characterized in that** the measuring element is provided with one (10) or two electrodes (10, 10') of a capacitive measuring system, which are at the same electrical potential, the counter-electrode being formed by the adjacent cylindrical surface or surfaces (3, 4).

13. A pressure sensor as in claim 12, **characterized in that** different widths are used for the cylindrical gaps (all a2 ) between the electrode or electrodes (10, 10') of the capacitive system and the adjacent cylindrical surfaces (3, 4).

14. A pressure sensor as in claim 6, 9, or 10, **characterized in that** the pressure sensing element is a strain gauge (18) placed on each cylindrical surface (3, 4) of the membrane part (2), possibly with an electrically insulating layer (16, 17) applied in between.

15. A pressure sensor as in claim 6, 9, or 10, **characterized in that** the pressure sensing element is configured as an element changing its electrical properties upon application of pressure, for example, a piezoelectric element (19), which is located between corresponding cylindrical surfaces (3, 4) of the membrane part (2), or between one of said cylindrical surfaces (3, 4) and an adjacent cylindrical wall of the annular groove (8).

16. A pressure sensor as in any of claims 2 to 4, **characterized in that** the U-shaped annular space (7) of the membrane part (2) is filled with a pressure-transmitting medium (20) in connection with a pressure sensing element (21) placed in the supporting base (1).

17. A pressure sensor as in any of claims 2 to 4, **characterized in that** the membrane part (2) is located in an annular groove (8) of the supporting base (1), and that the annular space (22) between annular groove (8) and membrane part (2) is filled with a pressure-transmitting medium (20) in connection with a pressure sensing element (21) located in the supporting base (1).

18. A pressure sensor as in any of claims 1 to 17, **characterized in that** the membrane part (2) is integrated into a component (26) projecting into the pressure chamber to be monitored, for instance, a spark plug, a heater plug, an injection nozzle, etc.

## Revendications

1. Capteur de pression avec une pièce de membrane (2) fixée à un support (1) et déformable par la pression à mesurer, créant au moins indirectement un signal, qui coopère éventuellement avec un élément de mesure de pression (3', 4', 10, 18, 19), la pièce de membrane (2) comportant au moins un couple de zones cylindriques (3, 4) disposées de manière concentrique l'une par rapport à l'autre avec un faible écartement radial, et fermées respectivement dans le sens périphérique, l'une des zones cylindriques (3) étant chargeable par la pression dans le sens de réduction de son diamètre (D₁) et l'autre (4) dans le sens de réduction de son diamètre (D₂) et dans le cas d'une variation de température une modification de même sens des deux diamètres (D₁, D₂) se produisant, caractérisé en ce que les zones cylindriques (3, 4) réunies respectivement par paire de la pièce de membrane (2) comportent pour la compensation des diamètres différents (D₁, D₂) des épaisseurs de paroi ou des masses différentes et/ou sont composées de matériaux ayant des coefficients de dilatation thermique différents.

2. Capteur de pression selon la revendication 1, caractérisé en ce que la pièce de membrane (2) est réalisée comme un corps de révolution en une pièce et forme au moins un espace annulaire (7) avec une section transversale en forme de U, les zones cylindriques (3, 4) délimitant l'espace annulaire (7) dans le sens radial et les bords libres (9) des zones cylindriques (3, 4) étant fixées sur le support (1).

3. Capteur de pression selon la revendication 1, caractérisé en ce que la pièce de membrane (2) est réalisée en plusieurs parties et respectivement deux des zones (3, 4) cylindriques disposées de manière concentrique l'une par rapport à l'autre forment un espace annulaire (7) ayant une section transversale en forme de U et sont fixées avec respectivement au moins un bord (9) au support (1).

4. Capteur de pression selon la revendication 3, caractérisé en ce que les bords (12) distants du support (1) des zones cylindriques (3, 4) sont reliés par paire à un élément d'appui (13).

5. Capteur de pression selon les revendications 3 ou 4, caractérisé en ce que respectivement deux des zones cylindriques (3, 4) placées de manière concentrique l'une par rapport à l'autre sont composées d'un matériau conducteur électrique, sont isolées l'une par rapport à l'autre et sont réalisées comme électrodes ainsi que contre électrodes d'un système de mesure capacitif.

6. Capteur de pression selon une des revendications 2 à 4, caractérisé en ce que la pièce de membrane (2) peut être charger sur le côté éloigné de l'espace annulaire (7) en forme de U par la pression à mesurer et en ce que dans l'espace annulaire (7) en forme de U existe au moins un élément de mesure de la pression (3', 4', 10, 18, 19).

7. Capteur de pression selon la revendication 6, caractérisé en ce que l'élément de mesure de la pression est une électrode (4') disposée dans l'espace annulaire (7) en forme de U d'un système de mesure capacitif, et en ce que la contre électrode est formée par une zone cylindrique (3, 4) de la pièce de membrane, qui est accouplée avec l'électrode (4') par une couche d'isolant électrique (14).

8. Capteur de pression selon la revendication 6, caractérisé en ce que l'élément de mesure de pression comporte deux électrode (3', 4') d'un système de mesure capacitif disposées dans l'espace annulaire en forme de U (7), électrodes qui sont accouplées avec les zones cyclindriques (3, 4) respectivement voisines par des couches d'isolant électrique (16, 17).

9. Capteur de pression selon une des revendications 2 à 4, caractérisé en ce que la pièce de membrane (2) est disposée dans une rainure de forme annulaire (8) du support (1), en ce que la pièce de membrane (2) est chargée par la pression à mesurer sur le côté tourné vers l'espace annulaire (7) en forme de U et en ce qu'entre chaque zone cylindrique (3, 4) de la pièce de membrane (2) et sur la paroi cylindrique de la rainure de forme annulaire (8) est disposé un élément de mesure de pression (10, 18, 19).

10. Capteur de pression selon la revendication 1, caractérisé en ce que la pièce de membrane (2) est réalisée fermée en soi de forme torique, les zones cylindriques (3, 4) formant des surfaces de délimitation concentriques d'un espace annulaire fermé (24), qui reçoit un élément de mesure de pression (10, 18, 19).

11. Capteur de pression selon la revendication 10, caractérisé en ce que l'élément de mesure est une électrode (10) d'un système de mesure capacitif, électrode qui s'appuie sur un élément de support (25) isolant électrique de la pièce de membrane (2) de forme torique.

12. Capteur de pression selon les revendications 6 ou 9, caractérisé en ce que l'élément de mesure comprend une ou deux électrodes (10, 10') se situant au même potentiel électrique d'un système de mesure capacitif, la contre électrode étant constituée par la ou les zones cylindriques (3, 4) voisines.

13. Capteur de pression selon la revendication 12, caractérisé en ce que les intervalles cylindriques (a₁, a₂) entre la ou les électrodes (10, 10') du système de mesure capacitif et les zones cylindriques (3, 4) respectivement voisines sont de largeur différente.

14. Capteur de pression selon les revendications 6, 9 ou 10, caractérisé en ce que l'élément de mesure de pression (1) est une bande de mesure d'allongement appliquée à chaque zone cylindrique (3, 4) de la pièce de membrane (2) éventuellement avec interposition d'une couche isolante électrique (16, 17).

15. Capteur de pression selon les revendications 6, 9 ou 10, caractérisé en ce que l'élément de mesure de pression est un élément modifiant ses propriétés électriques lors d'une charge effective de pression, par exemple un élément piezoélectrique (19), qui est disposé entre les zones cylindriques (3, 4) associées l'une à l'autre de la pièce de membrane (2) ou entre respectivement une des zones cylindriques (3, 4) et une paroi cylindrique (8) voisine de la rainure annulaire (8).

16. Capteur de pression selon une des revendications 2 à 4, caractérisé en ce que l'espace annulaire (7) en forme de U de la pièce de membrane (2) est rempli d'un milieu de transmission de pression (20), qui est en liaison avec un élément de mesure de pression (21) placé dans le support (1).

17. Capteur de pression selon une des revendications 2 à 4, caractérisé en ce que la pièce de membrane (2) est placée dans une rainure annulaire (8) du support (1) et en ce que l'espace annulaire (22) entre la rainure annulaire (8) et la pièce de membrane (2) est rempli d'un milieu de transmission de pression (20), qui est en liaison avec un élément de mesure de pression (21) placé dans le support (1).

18. Capteur de pression selon une des revendications 1 à 17, caractérisé en ce que la pièce de membrane (2) est intégrée dans un élément de construction (26) se dressant dans la chambre de pression à contrôler, élément par exemple d'une bougie d'allumage, d'une bougie-crayon de préchauffage, d'un injecteur ou de pièces semblables
